# EUROPÄISCHE PATENTSCHRIFT

(11) **EP 0 379 218 B1**
(45) Veröffentlichungstag und Bekanntmachung des Hinweises auf die Patenterteilung: **30.03.1994**
(21) Anmeldenummer: 90101102.3
(22) Anmeldetag: 19.01.1990
(51) Int. Cl.: B62M 1/14, A63B 23/12

(54) **Sport- und Trimmgerät**
Sporting and physical exercise device
Dispositif de sport et d'exercices

(30) Priorität: 20.01.1989 DE 3901642; 05.10.1989 DE 3933280
(43) Veröffentlichungstag der Anmeldung: 25.07.1990
(73) Patentinhaber: Pertramer, Oswald, I-39020 Marling (IT)
(72) Erfinder: Pertramer, Oswald, I-39020 Marling (IT)
(74) Vertreter: Haft, von Puttkamer, Berngruber, Czybulka

(56) Entgegenhaltungen:
- FR-A- 859 010
- FR-A- 928 638
- FR-E- 24 706

## Beschreibung

Die vorliegende Erfindung betrifft ein durch Muskelkraft angetriebenes Sport- und Trimmgerät, bestehend aus einem Fahrgestell mit einer langgestreckten Stellfläche für den Benutzer, das sich über mindestens zwei Räder auf dem Boden abstützt und aus einem Handhebelantrieb zur Umsetzung einer Hebelbewegung in eine Drehbewegung mindestens eines der Räder, wobei der Handhebelantrieb in einem Drehpunkt im Fahrgestell gelagert ist und einen Anlenkpunkt aufweist, an dem ein Koppelelement angelenkt ist, bestehend aus zwei Zahnstangen, die auf je ein auf einer Antriebsachse sitzendes Zahnrad wirken, derart, daß die Zahnstangen bei gleicher Bewegungsrichtung das zugehörige Zahnrad rechts- bzw. linksdrehend beaufschlagen und wobei jeweils nur ein Zahnrad über zugehörige Freiläufe die Antriebsachse mitdreht, während das andere Zahnrad in entgegengesetzter Richtung frei durchdreht.

Ein derartiges Sport- und Trimmgerät ist aus dem französischen Zusatzpatent 24 706 zum Hauptpatent 509 473 bekannt, wobei dieses bekannte Sport- und Trimmgerät mit einem oder mehreren Sitzen ausgestattet ist und daher insbesondere für den Antrieb durch sitzende Personen geeignet ist; der Antrieb besteht dabei aus einem Handhebel zur Umsetzung einer Hebelbewegung in eine Drehbewegung mindestens eines der Räder, wobei der Handhebelantrieb in einem Drehpunkt im Fahrgestell gelagert ist und einen Anlenkpunkt aufweist, an dem gemäß Fig. 7 ein Koppelelement angelenkt ist, das aus zwei Zahnstangen besteht, die auf je ein auf der Antriebsachse sitzendes Zahnrad derart wirken, daß die Zahnstangen bei gleicher Bewegungsrichtung das zugehörige Zahnrad rechts- bzw. linksdrehend beaufschlagen; ein Führungselement für die Zahnstangen in Form einer auf der Zahnstange gleitenden Rolle, die zwischen senkrecht angeordneten Flanschen gelagert ist, beaufschlagt die Zahnstange in Richtung des mit der Antriebswelle verbundenen Zahnrades, so daß diese nicht ohne weiteres außer Eingriff mit dem Zahnrad geraten kann. Nachteilig ist jedoch noch dabei die dadurch erhöhte Reibung zwischen den gleitenden Teilen, die durch die Muskelkraft zu überwinden ist sowie der erhebliche Bauaufwand für die Andruckrollen und die zugehörigen Lagerflansche.

Aufgabe der vorliegenden Erfindung ist es, ein derartiges Sport- und Trimmgerät, das von seinem Benutzer insbesondere in aufrechter Stellung vorwärtsbewegt werden kann, unter Einsatz der gesamten Rumpfmuskulatur sowie der Arm- und Beinmuskulatur dahingehend zu verbessern, daß die Lage der Zahnstangen auf den Zahnrädern des Antriebes in besonders einfacher und wirksamer Weise fixiert wird, um so einen sicheren Antrieb auch bei Seitswärtsneigung des Sport- und Trimmgerätes, d.h. insbesondere bei Kurvenfahrt zu gewährleisten und für eine ungestörte möglichst reibungsarme Umwandlung der oszillierenden Bewegung des Hebels in eine gleichgerichtete rotierende Bewegung zum Antrieb eines der Räder zu sorgen, so daß auch beim Kippen des Sport- und Trimmgerätes die Zahnräder nicht außer Eingriff mit den Zahnstangen gelangen.

Die Lösung dieser Aufgabe erfolgt mit den im kennzeichnenden Teil des Hauptanspruchs angegebenen Merkmalen; ein vorteilhaftes Ausführungsbeispiel ist im Unteranspruch 1 beschrieben.

Mit dem erfindungsgemäßen Sport- und Trimmgerät, das insbesondere in aufrechter Stellung des Benutzers durch eine harmonische Bewegung des ganzen Körpers sowohl angetrieben als auch gelenkt wird, kann eine Koordination der einzelnen Körperbewegungen ermöglicht werden, wie es z.B. für die Rehabilitation von geschwächten Muskeln von Patienten nach längerer Krankheit vorteilhaft ist. Gleichzeitig wird durch die aufrechte Position die Atmung erleichert, während bei den Lenkbewegungen, d.h. bei Seitswärtsneigung der Stellfläche zur Erzeugung eines Lenkeinschlages ein Wegkippen bzw. Abgleiten der Zahnstangen des Getriebes mit Sicherheit verhindert wird.

Außerdem liefern kleinste Hin- und Herbewegungen des Handhebels, unabhängig von dessen Stellung, einen Antrieb auf das mit dem Getriebe verbundene Rad.

Im folgenden wird die Erfindung anhand der Zeichnung näher erläutert, in der ein vorteilhaftes Ausführungsbeispiel dargestellt ist. Es zeigen:
Fig. 1 ein Ausführungsbeispiel eines Handhebelantriebs für das Sport- und Trimmgerät gemäß dem Oberbegriff des Anspruchs 1;
Fig. 2 einen Zahnstangenantrieb einer Achshälfte für den Handhebelantrieb nach Fig. 1 und
Fig. 3 einen Querschnitt durch den Zahnstangenantrieb gemäß Fig. 2.

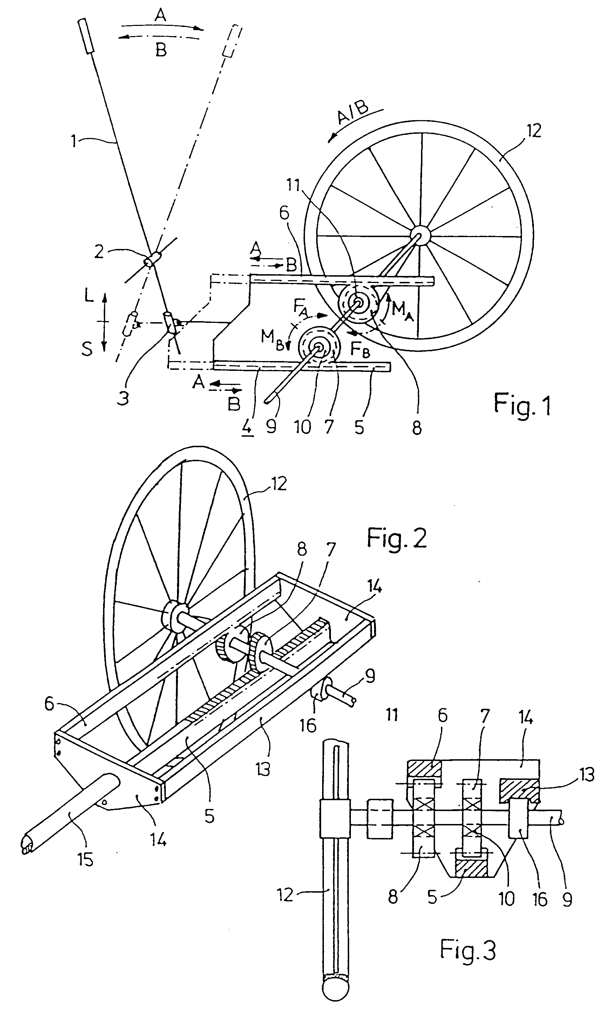

Fig. 1 zeigt das Antriebsprinzip eines mechanischen Handhebelantriebs gemäß des Oberbegriffs des Patentanspruches 1 mit einem Handhebel 1, der in einem Drehpunkt 2 im Fahrgestell auf einem Zapfen gelagert ist, wobei ein Anlenkpunkt 3 vorgesehen ist, an dem ein aus zwei Zahnstangen 5, 6 bestehendes Koppelelement 4 gelagert ist. Die Zahnstangen stehen je mit einem Zahnrad 7, 8 in Eingriff und sind mit einer Antriebsachse 9 über je eiinen Freilauf 10, 11 verbunden, wobei die Freiläufe 10, 11 eine linksdrehende Mitnahme bzw. eine rechtsdrehende Freigabe der Verbindung zwischen den Zahnrädern 7, 8 und der Achse 9 erlauben. Dazu ist die eine Zahnstange 6 oberhalb und die andere Zahnstange 5 unterhalb des zugehörigen Zahnrades 7, 8 angeordnet, um so die Hebelbewegung nach hinten bzw. nach vorne in eine Längsdrehung eines Laufrades 12 zu bewerkstelligen, das fest mit der Achse 9 verbunden ist.

Mit A ist jeweils die Bewegungsrichtung der Elemente gekennzeichnet, wenn der Handhebel 1 nach hinten gezogen wird und mit B, wenn der Handhebel vorwärts gedrückt wird. M_{A} bzw. M_{B} bedeutet dabei Mitnahme bei Richtung A bzw. B und F_{A} bzw. F_{B} bedeutet den Freilauf in Richtung A bzw. B.

In den Fig. 2 und 3 ist eine Ansicht bzw. ein Schnitt durch die im Kennzeichen des Hauptanspruches angegebene spezielle Lagefixierung der Zahnstangen auf den Zahnrädern des Getriebes des beanspruchten Handhebelantriebs dargestellt, bei der die beiden Zahnstangen 5, 6 mittels einer weiteren Führungsschiene 13 am vorderen und hinteren Ende je mit einer Platte 14 fest verbunden sind. An der vorderen Platte ist eine Zugstange 15 angebracht, die zum Anlenkpunkt 3 führt. Die Führungsschiene 13 läuft auf einem auf der Achse 9 angebrachten Kugellager 16 und verhindert mit diesem, daß die beiden Zahnstangen 5,6 wegkippen bzw. heruntergleiten.

Zur Verstellung der Hebelübersetzung bzw. des Kraftaufwands bei diesem Ausführungsbeispiel kann der Anlenkpunkt 3 am unteren Hebelende entweder in Richtung Drehpunkt 2 für eine langsame Geschwindigkeit L bzw. einen geringeren Kraftaufwand oder vom Drehpunkt 2 weg für eine höhere Geschwindigkeit S bzw. einen größeren Kraftaufwand verschoben werden. Es ist auch möglich, den Anlenkpunkt 3 entlang der Längsachse des Handhebels 1 zu verschieben.

## Patentansprüche

1. Durch Muskelkraft angetriebenes Sport- und Trimmgerät, bestehend aus einem Fahrgestell mit einer langgestreckten Stellfläche für den Benutzer, das sich über mindestens zwei Räder (12) auf dem Boden abstützt und aus einem Handhebelantrieb zur Umsetzung einer Hebelbewegung in eine Drehbewegung mindestens eines der Räder, wobei der Handhebelbetrieb in einem Drehpunkt (2) im Fahrgestell gelagert ist und einen Anlenkpunkt (3) aufweist, an dem ein Koppelelement (4) angelenkt ist, bestehend aus zwei Zahnstangen (5, 6), die auf je ein auf einer Antriebsachse (9) sitzendes Zahnrad (7, 8) wirken, derart, daß die Zahnstangen bei gleicher Bewegungsrichtung das zugehörige Zahnrad rechts- bzw. linksdrehend beaufschlagen, und wobei jeweils nur ein Zahnrad über zugehörige Freiläufe (10, 11) die Antriebsachse mitdreht, während das andere Zahnrad in entgegengesetzter Richtung frei durchdreht, dadurch gekennzeichnet, daß die Lage der Zahnstangen (5, 6) auf den Zahnrädern (7, 8) durch eine zusätzliche Führungsschiene (13) fixiert ist, und daß die Führungsschiene (13) mit den Zahnstangen (5, 6) fest verbunden ist und auf einem auf der Antriebsachse (9) angebrachten Kugellager (16) gleitet, das sie zur seitlichen Führung des Koppelelementes (4) beidseitig umgreift.

2. Sport- und Trimmgerät nach Anspruch 1, dadurch gekennzeichnet, daß der Anlenkpunkt (3) am Handhebel (1) zur Verstellung des Übersetzungsverhältnisses höhenverschiebbar angeordnet ist.

## Claims

1. Sports and keep-fit apparatus which is driven by muscular force and is composed of a chassis, which has an elongate standing surface for the user and is supported on the ground via at least two wheels (12), and of a hand lever drive for converting a lever movement into a rotational movement of at least one of the wheels, the hand lever drive being mounted in the chassis in a fulcrum (2) and having an articulation point (3) on which there is articulated a coupling element (4), which is composed of two racks (5, 6) which act on in each case one toothed wheel (7, 8), resting on a drive spindle (9), such that the racks, with the same direction of movement, set the appertaining toothed wheel in clockwise rotation and anti-clockwise rotation, respectively, and in each case only one toothed wheel driving the drive spindle, via appertaining free-wheels (10, 11), while the other toothed wheel spins freely in the opposite direction, characterized in that the position of the racks (5, 6) on the toothed wheels (7, 8) is fixed by an additional guide rail (13), and in that the guide rail (13) is fixedly connected to the racks (5, 6) and slides on a ball bearing (16) which is fitted on the drive spindle (9) and engages around the latter on both sides in order to guide the coupling element (4) laterally.

2. Sports and keep-fit apparatus according to Claim 1, characterized in that the articulation point (3) is arranged such that it can be vertically displaced on the hand lever (1) in order to adjust the transmission ratio.

## Revendications

1. Appareil de sport et d'entraînement mû par la force musculaire, composé d'un châssis avec un emplacement allongé pour le positionnement de l'utilisateur, qui s'appuye sur le sol au moyen d'au moins deux roues (12), et d'un levier d'actionnement à main pour la transformation d'un mouvement de levier en un mouvement de rotation d'au moins une des roues, le levier d'actionnement à main étant fixé au châssis en un pivot (2) et comportant un joint d'articulation (3) sur lequel vient s'articuler un élément d'accouplement (4) comportant deux crémaillières (5, 6), qui agissent chacune sur une roue dentée (7, 8) montée sur un axe d'entraînement (9), de façon que, pour un même sens de mouvement, les crémaillères entraînent les roues dentées correspondantes respectivement en rotation vers la droite et vers la gauche, et selon le cas une seule des roues dentées tournant avec l'axe d'entraînement par le biais de pignons libres associés (10, 11), alors que l'autre roue dentée tourne à vide dans le sens contraire, caractérisé en ce que la position des crémaillères (5, 6) par rapport aux roues dentées (7, 8) est fixée au moyen d'un rail de guidage supplémentaire (13), et en ce que le rail de guidage (13) est assemblé rigidement avec les crémaillères (5, 6) et glisse sur un roulement à billes (16) monté sur l'axe d'entraînement (9), qu'il enserre de part et d'autre afin d'assurer le guidage latéral de l'élément d'accouplement (4).

2. Appareil de sport et d'entraînement selon la revendication 1, caractérisé en ce que le joint d'articulation (3) du levier à main est réglable en hauteur afin de pouvoir modifier le rapport de transmission.
